(19) **Europäisches Patentamt European Patent Office Office européen des brevets**

(11) **EP 4 448 461 B1**

(12) **FASCICULE DE BREVET EUROPEEN**

(45) Date de publication et mention de la délivrance du brevet:
**03.09.2025 Bulletin 2025/36**

(21) Numéro de dépôt: **22840270.7**

(22) Date de dépôt: **15.12.2022**

(51) Classification Internationale des Brevets (IPC):
**C03C 3/087** (2006.01)    **C03C 10/00** (2006.01)

(52) Classification Coopérative des Brevets (CPC):
**C03C 3/087; C03C 10/0027; C03C 10/0054**

(86) Numéro de dépôt international:
**PCT/FR2022/052361**

(87) Numéro de publication internationale:
**WO 2023/111460 (22.06.2023 Gazette 2023/25)**

(54) **PLAQUE VITROCERAMIQUE**

**GLASKERAMIK-KOCHFELD**

**GLASS-CERAMIC HOB**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.12.2021 FR 2113829**

(43) Date de publication de la demande:
**23.10.2024 Bulletin 2024/43**

(73) Titulaire: **Eurokera S.N.C.**
**02400 Château-Thierry (FR)**

(72) Inventeurs:
• **SERVAIS, Hélène**
  **93300 AUBERVILLIERS (FR)**
• **COCHARD, Jean-Patrick**
  **93300 AUBERVILLIERS (FR)**
• **JANIAUD, Eric**
  **93300 AUBERVILLIERS (FR)**

(74) Mandataire: **Saint-Gobain Recherche**
**41 Quai Lucien Lefranc**
**93300 Aubervilliers (FR)**

(56) Documents cités:
**WO-A1-2014/079929    US-A1- 2019 077 694**

**Description**

La présente invention concerne le domaine des plaques de vitrocéramique ainsi que leurs procédés d'obtention.

Les plaques de vitrocéramique sont produites en soumettant des plaques de verre d'aluminosilicate de lithium à un traitement thermique à haute température, aussi appelé cycle de céramisation. Ce traitement thermique génère des cristaux de structure beta-quartz ou beta-spodumène, dont le coefficient de dilatation thermique est négatif, au sein de la plaque. Le matériau vitrocéramique n'est donc plus un verre : il est constitué de cristaux reliés par une phase vitreuse résiduelle ; et présente un coefficient de dilatation thermique proche de zéro.

De telles plaques de vitrocéramique sont notamment utilisées dans les dispositifs de cuisson, aussi appelés tables de cuisson. Ces dispositifs sont souvent encastrés dans un plan de travail ou montés sur des cuisinières. Les plaques de vitrocéramique peuvent également trouver des applications comme plan de travail. Dans tous les cas, l'aspect esthétique de la plaque est un critère important dans le choix du consommateur.

Les plaques de vitrocéramiques utilisées notamment dans les dispositifs de cuisson sont généralement des vitrocéramiques sombres, typiquement colorées à l'aide d'oxyde de vanadium. Elles ont la particularité de présenter une transmission lumineuse faible, voire très faible, permettant notamment de masquer les éléments internes tels que les moyens de chauffage. Leurs utilisations dans les dispositifs de cuisson imposent de plus certaines exigences propres à ces applications. Les plaques doivent par exemple présenter un faible coefficient de dilatation thermique Une bonne transmission dans l'infrarouge est également nécessaire pour le fonctionnement des commandes tactiles (autour de 950 nm) ou des moyens de chauffage radiatifs (autour de 2400 nm).

Le document WO 2014079929 A1 divulgue des plaques vitrocéramiques de quarz-beta avec courbe de transmission contrôlée et une forte teneur en fer pour des applications telles que les plaques de cuisson.

Le document US2019077694 A1 divulgue une vitrocéramique du type aluminosilicate de lithium contenant une solution solide de beta-spodumène présentant un aspect particulier en réflexion ainsi qu'une courbe de transmission contrôlée, ainsi que des articles en une telle vitrocéramique, notamment des plaques de cuisson.

Pour des besoins aussi bien fonctionnels qu'esthétiques, les dispositifs de cuisson sont en général équipés de moyens d'affichage tel que des diodes électroluminescentes (LED) ou des écrans. Il existe une demande accrue du marché de pouvoir offrir un éventail de choix plus important, en particulier du point de vue du rendu esthétique. Dans ce contexte, un des aspects de différenciation adopté est le développement d'effets esthétiques variés via par l'utilisation de moyens d'affichages, par exemple de LED, visibles au travers des plaques de vitrocéramiques. Les propriétés requises pour les plaques de vitrocéramique, notamment en terme de transmission lumineuse, peuvent ainsi varier en fonction des effets recherchés. Or, faire varier les propriétés optiques d'une vitrocéramique nécessite en général des ajustements de composition. Pouvoir disposer d'une gamme variée de plaques vitrocéramiques implique ainsi des surcoûts de production non négligeables, par exemple du fait des temps de transition nécessaires au changement de composition au niveau des fours de fusion pour la production du verre mère et/ou des besoins de gestion des stocks. Il existe donc un besoin de disposer d'un verre mère permettant d'obtenir des plaques vitrocéramiques dont les propriétés, notamment en terme de transmission lumineuse, puissent être modulées afin de pouvoir répondre à un cahier des charges plus large, sans avoir besoin d'en adapter la composition.

Ainsi, la présente invention concerne une plaque en vitrocéramique de type aluminosilicate de lithium caractérisé en ce qu'elle présente une composition chimique comprenant les constituants suivants dans les limites définies ci-après exprimées en pourcentages pondéraux :

$SnO_2$ 0,05 à <0,35%
$V_2O_5$ 0,05 à 0,40%
$Fe_2O_3$ >0,32 à 0,40%
$Cr_2O_3$ 0,005 à 0,040%,
et les teneurs en $SnO_2$, $V_2O_5$ et $Fe_2O_3$ satisfont $14 < 1000 \times (2\,Fe_2O_3 - SnO_2) \times V_2O_5 /2 < 40$.

La présente invention concerne également un procédé de fabrication d'une plaque de vitrocéramique comprenant la fourniture d'une plaque de verre, dit verre mère, de type aluminosilicate de lithium et la céramisation de la plaque de verre.

La plaque de verre précurseur de la vitrocéramique selon l'invention, ou verre mère, constitue un autre objet de la présente invention. Cette plaque de verre constitue un produit intermédiaire permettant l'obtention de la plaque de vitrocéramique selon l'invention.

Pour une composition donnée, il existe une fenêtre de céramisation dans laquelle les paramètres de céramisation (notamment température et durée du palier de céramisation) peuvent être modifiés tout en assurant une cristallisation adéquate procurant à la vitrocéramique ses propriétés mécaniques particulières, notamment un coefficient de dilatation thermique proche de zéro, typiquement d'au plus $15.10^{-7}$ $K^{-1}$, voire d'au moins $10.10^{-7}$ $K^{-1}$, ou même d'au plus $5.10^{-7}$ $K^{-1}$ entre 20 et 700°C. La Demanderesse a mis en évidence qu'en choisissant les teneurs en $SnO_2$, $V_2O_5$, $Fe_2O_3$ et $Cr_2O_3$ de

sorte à respecter les équilibres définis selon l'invention, il est possible d'obtenir, à partir d'un même verre mère, des vitrocéramiques présentant un plus grand éventail de propriétés, notamment de propriétés optiques, tout en maintenant les exigences requises pour les applications souhaitées, notamment dans un dispositif de cuisson. En particulier, il est possible d'atteindre une plage de transmission lumineuse plus large dans la fenêtre de céramisation.

L'oxyde de vanadium ($V_2O_5$) est un colorant principal des vitrocéramiques selon l'invention. Elles présentent une teneur en $V_2O_5$ de 0,05 à 0,40%, de préférence de 0,07 à 0,30%, plus préférentiellement de 0,10 à 0,20%. $V_2O_5$, en présence de $SnO_2$, assombrit significativement le verre pendant sa céramisation. $V_2O_5$ est responsable de l'absorption, principalement en deçà de 700 nm et il est possible, en sa présence, de conserver une transmission suffisamment élevée à 950 nm et dans l'infrarouge.

L'oxyde de chrome ($Cr_2O_3$) est compris en une teneur de 0,005 à 0,040%, de préférence de 0,010 à 0,032%, plus préférentiellement de 0,012 à 0,030%. Dans certains modes de réalisation la teneur en $Cr_2O_3$ est de 0,010 à 0,025%, voire à 0,020%.

Les vitrocéramiques selon l'invention comprennent une teneur en oxyde de fer total (exprimée en $Fe_2O_3$) strictement supérieure à 0,32% et peut aller jusqu'à 0,40%. Elle peut être de 0,33 à 0,40%, plus préférentiellement de 0,35 à 0,40%.

La composition renferme l'oxyde d'étain ($SnO_2$) à titre d'agent d'affinage. L'affinage est d'autant plus aisé à mettre en œuvre et d'autant plus performant que la quantité de $SnO_2$ présente est importante. Il est cependant supposé que $SnO_2$ affecte également la coloration en modifiant les équilibres d'oxydoréduction avec le vanadium et le fer durant la céramisation. La teneur en $SnO_2$ est ainsi de 0,05% à strictement inférieure à 0,35%, de préférence de 0,10 à 0,32%, plus préférentiellement de 0,15 à 0,30%.

Les teneurs en $SnO_2$, $V_2O_5$ et $Fe_2O_3$ satisfont les conditions suivantes :

$$14 < 1000 \times (2\ Fe_2O_3 - SnO_2) \times V_2O_5\ /2 < 40,$$

de préférence

$$20 < 1000 \times (2\ Fe_2O_3 - SnO_2) \times V_2O_5\ /2 < 35.$$

Cet équilibre permet d'améliorer significativement la plage de transmission lumineuse atteignable sur la fenêtre de céramisation.

Les teneurs en $SnO_2$, $V_2O_5$ et $Fe_2O_3$ peuvent également satisfaire les conditions suivantes : $7,0 < Fe_2O_3 / (V_2O_5 \times SnO_2) < 15$, de préférence $8,0 < Fe_2O_3 / (V_2O_5 \times SnO_2) < 15$. Le maintien de cet équilibre permet d'améliorer les propriétés optiques de la vitrocéramique.

La silice ($SiO_2$) est le principal oxyde formateur du verre. De fortes teneurs vont contribuer à augmenter la viscosité du verre au-delà de ce qui est acceptable, tandis que des teneurs trop faibles vont augmenter le coefficient de dilatation thermique. La teneur en silice est de préférence comprise dans un domaine allant de 52 à 75%, notamment de 64 à 70%, 65,0 à 70%.

L'alumine ($Al_2O_3$) contribue également à augmenter la viscosité du verre et donc à le rendre plus difficile à fondre. Lorsqu'il est présent en trop faibles teneurs, le verre est toutefois difficile à céramiser. La teneur en alumine est de préférence comprise dans un domaine allant de 18 à 27%, notamment de 18 à 21%.

L'oxyde de lithium ($Li_2O$) est essentiel pour la formation de cristaux de β-quartz. Une teneur minimale est également nécessaire afin de réduire la viscosité du verre à haute température. La teneur en $Li_2O$ est de préférence comprise dans un domaine allant de 2,5 à 5,5%, notamment de 2,5 à 3,9%.

Les teneurs en soude ($Na_2O$) et potasse ($K_2O$) sont de préférence chacune inférieures à 3%, plus préférentiellement inférieures à 1,0%. La somme de ces teneurs, notée $Na_2O+K_2O$, est de préférence limitée afin d'assurer un coefficient de dilatation thermique faible. Cette somme est avantageusement d'au plus 1,5%, voire 1%.

Afin d'assurer une viscosité adéquate à haute température, permettant d'optimiser à la fois la fusion et le formage du verre mère, la composition de la plaque contient de la chaux (CaO) et de l'oxyde de baryum (BaO). La teneur en CaO est de préférence d'au plus 2,5%, plus préférentiellement d'au plus 1,0%, d'une part pour éviter une trop grande corrosion des réfractaires du four, d'autre part pour limiter la formation de cristaux potentiellement diffusants. La teneur en BaO est de préférence d'au plus 3,5%, notamment d'au plus 3%. La somme des teneurs en CaO et BaO (notée CaO+BaO) est de préférence comprise dans un domaine allant de 2 à 5%, notamment de 2,5 à 4%.

La teneur en MgO est de préférence d'au plus 3%. Des teneurs allant de 0,20 à 1,5% sont préférées.

La teneur en SrO est de préférence d'au plus 2%, voir au plus 1,4%. Elle est même avantageusement nulle.

La teneur en ZnO est de préférence d'au plus 3,5% et avantageusement de 1,2 à 2,8%. Lors de la céramisation, cet oxyde participe à la formation des cristaux de structure β-quartz, et contribue donc à l'abaissement du coefficient de dilatation thermique.

Les oxydes de titane ($TiO_2$) et de zirconium ($ZrO_2$) servent d'agents nucléants et favorisent la cristallisation en masse des cristaux de structure β-quartz. La teneur en $TiO_2$ est de préférence de 1,2 à 5,5%, plus préférentiellement de 1,8 à 3,2%. La teneur en $ZrO_2$ est de préférence inférieure à 3%, plus préférentiellement de 1,0 à 2,5. Des teneurs en $ZrO_2$ élevées peuvent conduire à des températures au liquidus trop élevées. La présence conjointe de TiO2 et ZrO2 est avantageuse. La somme de leurs teneurs ($TiO_2$+$ZrO_2$) est de préférence supérieure à 3,80%, plus préférentiellement supérieure à 4%. De faibles teneurs peuvent favoriser une croissance trop importante des cristaux entraînant une diffusion de la lumière indésirable.

La plaque de vitrocéramique selon l'invention présente avantageusement un composition chimique comprenant, outre $SnO_2$, $V_2O_5$, $Fe_2O_3$ et $Cr_2O_3$, les constituants suivants dans les limites définies ci-après exprimées en pourcentages pondéraux :

| | | |
|---|---|---|
| $SiO_2$ | 52 à 75%, | de préférence 64 à 70% |
| $Al_2O_3$ | 18 à 27%, | de préférence 18 à 21% |
| $Li_2O$ | 2,5 à 5,5%, | de préférence 2,5 à 3,9% |
| $K_2O$ | 0 à 3%, | de préférence 0 à 1,0% |
| $Na_2O$ | 0 à 3%, | de préférence 0 à 1,0% |
| $ZnO$ | 0 à 3,5%, | de préférence 1,2 à 2,8% |
| $MgO$ | 0 à 3%, | de préférence 0,20 à 1,5% |
| $CaO$ | 0 à 2,5%, | de préférence 0 à 1,0% |
| $BaO$ | 0 à 3,5%, | de préférence 0 à 3% |
| $SrO$ | 0 à 2%, | de préférence 0 à 1,4% |
| $TiO_2$ | 1,2 à 5,5%, | de préférence 1,8 à 3,2% |
| $ZrO_2$ | 0 à 3%, | de préférence 1,0 à 2,5% |
| $P_2O_5$ | 0 à 8%, | de préférence 0 à 3%. |

La composition chimique de la plaque en vitrocéramique comprend les oxydes précédemment indiqués. De préférence, elle consiste essentiellement en ces oxydes. L'expression « consiste essentiellement en » se comprend en ce sens que les oxydes précités constituent au moins 96%, voire 98% et même 99% du poids de la vitrocéramique. La composition chimique de la plaque en vitrocéramique ne comprend en général, comme colorants, que Fe2O3, V2O5 et Cr2O3. D'autres colorants, tels que MnO, $Bi_2O_3$, CoO, NiO ou $CeO_2$, peuvent être présents sous forme de traces, typiquement en une teneur totale inférieure à 0,1%, voire inférieure à 0,05% ou même inférieure à 0,01%. En particulier, la composition chimique de la plaque en vitrocéramique comprend typiquement moins de 10 ppm, voire moins de 5 ppm de CoO.

La plaque de vitrocéramique présente typiquement une épaisseur de 2 à 10 mm, notamment 2,5 à 8 mm, par exemple 3, 4, 5 ou 6 mm. Les dimensions (longueur et largeur) de la feuille de vitrocéramique dépendent de l'application à laquelle elle est destinée : elle présente généralement des dimensions de 20 à 120 cm, notamment pour ces applications dans des dispositifs de cuisson, mais peut également présenter des dimensions plus importantes, par exemples supérieures à 200 cm, pour des applications de plan de travail.

La plaque de vitrocéramique selon l'invention présente typiquement une transmission lumineuse de 0,5 à 8%, de préférence de 0,7 à 6%. La transmission lumineuse est mesurée à l'épaisseur réelle de la plaque de vitrocéramique selon la norme ISO 9050:2003. Elle présente par ailleurs, à l'épaisseur réelle, une transmission optique à 625 nm supérieure à 3,5%, de préférence supérieure à 4%, une transmission optique à 950 nm de 40 à 70% et une transmission optique à 1600 nm de 45 à 75%.

L'invention porte également sur une plaque de verre de type aluminosilicate de lithium, précurseur de la plaque de vitrocéramiques selon l'invention. La composition chimique de la plaque en verre est identique, ou sensiblement identique, à celle de la plaque de vitrocéramique selon l'invention. Les teneurs décrites ci-dessus en relation avec la composition de la plaque de vitrocéramique s'appliquent par conséquent également à la composition de la plaque de verre selon l'invention. En particulier, la plaque de verre présente une composition chimique comprenant les constituants suivants dans les limites définies ci-après exprimées en pourcentages pondéraux :

$SnO_2$ 0,05 à <0,35%
$V_2O_5$ 0,05 à 0,40%
$Fe_2O_3$ >0,32 à 0,40%
$Cr_2O_3$ 0,005 à 0,040%,
et les teneurs en SnO2, $V_2O_5$ et $Fe_2O_3$ satisfont $14 < 1000 \times (2\,Fe_2O_3 - SnO_2) \times V_2O_5 /2 < 40$.

La plaque de verre est en revanche de nature exclusivement vitreuse, c'est-à-dire exempte de cristaux. On peut incidemment noter que lesdits verres précurseurs présentent avantageusement une transmission optique, pour toute longueur d'onde comprise entre 1000 et 2500 nm, supérieure à 60 %. Leur fusion et affinage sont alors facilités.

L'invention a encore pour objet un procédé de fabrication d'une plaque en vitrocéramique selon l'invention comprenant la fourniture d'une plaque de verre selon l'invention et la céramisation de la plaque de verre. Plus précisément, la fourniture de la plaque de verre comprend une étape de fusion et une étape de formage.

La fusion est typiquement réalisée dans des fours réfractaires à l'aide de brûleurs utilisant comme comburant de l'air ou, mieux, de l'oxygène, et comme combustible du gaz naturel ou du fioul. Des résistances, notamment en molybdène ou en platine, immergées dans le verre en fusion peuvent également apporter toute ou partie de l'énergie utilisée pour obtenir un verre fondu. Des matières premières (silice, spodumène, pétalite, carbonate de lithium etc.) sont introduites dans le four et subissent sous l'effet des hautes températures diverses réactions chimiques, telles que des réactions de décarbonatation, de fusion proprement dite... La température maximale atteinte par le verre est typiquement d'au moins 1500°C, notamment comprise entre 1600 et 1700°C. Le formage du verre en plaques peut se faire de manière connue par laminage du verre entre des rouleaux métalliques ou céramiques, par étirage (vers le haut ou vers le bas) ou encore par flottage, technique consistant à déverser le verre fondu sur un bain d'étain en fusion.

L'étape de céramisation implique de préférence un cycle thermique mettant en œuvre une montée en température vers une température de cristallisation de préférence comprise dans un domaine allant de 850 à 1000°C, par exemple de 900 à 980°C, ou même de 920 à 960°C. Le choix des températures et/ou des temps de céramisation, à adapter à chaque composition, permet d'ajuster le coefficient de dilatation thermique du matériau obtenu en faisant varier la taille et la quantité de cristaux. De préférence, le cycle thermique comprend une montée vers une température comprise entre 650°C et 850°C pendant une durée de 15 à 200 minutes (étape de nucléation) puis une montée contrôlée vers la température de cristallisation, typiquement pendant une durée de 5 à 120 minutes, suivie du maintien de la température de cristallisation pendante une durée de 5 à 20 minutes (étape de croissance cristalline).

L'invention a également pour objet un article, notamment un dispositif de cuisson ou un plan de travail, comprenant au moins une plaque en vitrocéramique selon l'invention.

Le dispositif de cuisson est de préférence du type radiant ou par induction. Il est préférable que la plaque soit apte à dissimuler les moyens de chauffage (par exemple les inducteurs), le câblage électrique, ainsi que les circuits de commande et de contrôle du dispositif de cuisson. A cet effet il est possible de munir au moins une partie de la surface de la plaque d'un revêtement déposé sur et/ou sous la plaque, ledit revêtement ayant la capacité d'absorber et/ou de réfléchir et/ou de diffuser le rayonnement lumineux. Le revêtement peut être déposé sous la plaque, c'est-à-dire sur la surface en regard des éléments internes du dispositif, aussi appelée « face inférieure », et/ou sur la plaque, c'est-à-dire en « face supérieure ». Le revêtement peut être une couche à base organique, telle qu'une couche de peinture, de résine ou de laque, ou une couche à base minérale, telle qu'un émail ou une couche métallique ou d'un oxyde, nitrure, oxynitrure, oxycarbure d'un métal. De préférence, les couches organiques seront déposées en face inférieure, tandis que les couches minérales, notamment les émaux, seront déposées en face supérieure. Outre la plaque de vitrocéramique et au moins un inducteur (de préférence trois voire quatre et même cinq), le dispositif de cuisson peut comprendre au moins un dispositif émettant de la lumière, au moins un dispositif de commande et de contrôle, l'ensemble étant typiquement compris dans un caisson. Le(s) dispositif(s) émettant de la lumière est(sont) avantageusement choisi(s) parmi les afficheurs à cristaux liquides (LCD), à diodes électroluminescentes (par exemple les afficheurs à 7 segments), éventuellement organiques (OLED), les afficheurs fluorescents (VFD). Ces dispositifs émettant de la lumière peuvent être purement décoratifs, par exemple séparer visuellement différentes zones de la plaque. Le plus souvent toutefois ils auront un rôle fonctionnel en affichant diverses informations utiles pour l'utilisateur, notamment indication de la puissance de chauffe, de la température, de programmes de cuisson, de temps de cuisson, de zones de la plaque dépassant une température prédéterminée. Les dispositifs de commande et de contrôle comprennent généralement des touches sensitives, par exemple du type capacitif ou à infrarouge. L'ensemble des éléments internes est généralement fixé à un caisson, souvent métallique, qui constitue donc la partie inférieure du dispositif de cuisson, normalement dissimulé dans le plan de travail ou dans le corps de la cuisinière.

Les exemples qui suivent illustrent l'invention de manière non limitative.

On a fondu de manière connue différents verres dont la composition chimique (teneur pondérale en oxydes) est donnée dans le tableau 1, et formé pour chaque composition plusieurs échantillons de plaques de verre mère d'épaisseur 4 mm. Les plaques sont ensuite soumises à un traitement de céramisation selon différents cycles, caractérisés par des températures de céramisation $T_c$ différentes (925°C, 945°C et 960°C). Les cycles de céramisation mettent en œuvre un chauffage rapide jusqu'à 600°C, une montée jusqu'à 820°C à une vitesse de 17°C/min, le maintien de ce palier pendant 10 min, puis une montée jusqu'à la température de céramisation $T_c$ à une vitesse de 17°C/min, le maintien de la température de céramisation $T_c$ pendant 10 min, et enfin le refroidissement contrôlé la vitrocéramique jusqu'à température ambiante.

La transmission lumineuse (Tv) est mesurée pour chaque échantillon céramisé selon la norme ISO 9050:2003. Pour une composition de verre mère donnée, $Tv_{max}$, et $Tv_{min}$ représentent respectivement les transmissions lumineuses maximum et minium mesurées parmi les vitrocéramiques obtenues à l'aide des différents cycles de céramisation.

Le tableau 1 ci-dessous résumant les résultats obtenus inique :

- La composition des verres mère utilisés ;
- La transmission lumineuse minimale $Tv_{min}$ des vitrocéramiques obtenues, en fonction du cycle de céramisation, pour une composition la composition de verre mère donnée ;
- L'amplitude de transmission lumineuse $Tv_{max} - Tv_{min}$ atteinte avec les trois cycles de céramisation.

[Table 1]

|  | C1 | C2 | I1 |
|---|---|---|---|
| $SiO_2$ | 65,3 | 64,4 | 65,2 |
| $Al_2O_3$ | 20,6 | 21,04 | 20,6 |
| $Li_2O$ | 3,75 | 3,80 | 3,63 |
| $K_2O$ | 0,21 | 0,25 | 0,24 |
| $Na_2O$ | 0,60 | 0,58 | 0,49 |
| ZnO | 1,50 | 1,51 | 1,39 |
| MgO | 0,37 | 0,33 | 0,40 |
| CaO | 0,48 | 0,42 | 0,44 |
| BaO | 2,50 | 2,53 | 2,40 |
| $TiO_2$ | 2,90 | 3,03 | 2,96 |
| $ZrO_2$ | 1,30 | 1,34 | 1,54 |
| $SnO_2$ | 0,31 | 0,36 | 0,25 |
| $V_2O_5$ | 0,023 | 0,09 | 0,11 |
| $Fe_2O_3$ | 0,14 | 0,24 | 0,36 |
| $Cr_2O_5$ | 0,024 | 0,022 | 0,013 |
| 1000 x (2 Fe - Sn) x V/2 | -0,3 | 5,4 | 25,9 |
| $Tv_{min}$ (%) | 1,4 | 0,97 | 1,17 |
| $Tv_{max} - Tv_{min}$ (%) | 0,9 | 2,0 | 4,6 |

Ces résultats montrent que les compostions de selon l'invention permettent d'atteindre une amplitude de transmission lumineuse, utiles notamment pour les applications comme plaque de cuisson, plus large avec une même composition de verre mère. Cela permet d'adapter les propriétés optiques à différents cahiers des charges sans avoir à modifier la composition du verre mère.

**Revendications**

1. Plaque de vitrocéramique de type aluminosilicate de lithium **caractérisé en ce qu'**elle présente une composition chimique comprenant les constituants suivants dans les limites définies ci-après exprimées en pourcentages pondéraux :

    $SnO_2$ 0,05 à <0,35%
    $V_2O_5$ 0,05 à 0,40%
    $Fe_2O_3$ >0,32 à 0,40%
    $Cr_2O_3$ 0,005 à 0,040%, et
    les teneurs en $SnO_2$, $V_2O_5$ et $Fe_2O_3$ satisfont $14 < 1000$ x $(2 Fe_2O_3 - SnO_2)$ x $V_2O_5$ /2 < 40.

2. Plaque vitrocéramique selon la revendication 1, **caractérisée en ce que** les teneurs en $SnO_2$, $V_2O_5$ et $Fe_2O_3$ satisfont $20 < 1000$ x $(2 Fe_2O_3 - SnO_2)$ x $V_2O_5$ /2 < 35.

3. Plaque vitrocéramique selon l'une des revendications 1 ou 2, **caractérisée en ce qu'**elle comprend une teneur en $V_2O_5$ de 0,07 à 0,30%, de préférence de 0,10 à 0,20%.

4. Plaque vitrocéramique selon l'une des revendications 1 à 3, **caractérisée en ce qu'**elle comprend une teneur en $Fe_2O_3$ de 0,35 à 0,40%.

5. Plaque vitrocéramique selon l'une des revendications 1 à 4, **caractérisée en ce qu'**elle comprend une teneur en $SnO_2$ de 0,10 à 0,32%, de préférence de 0,15 à 0,30%.

6. Plaque vitrocéramique selon l'une des revendications 1 à 5, **caractérisée en ce qu'**elle comprend une teneur en $Cr_2O_3$ de 0,010 à 0,032%, de préférence de 0,012 à 0,030%.

7. Plaque vitrocéramique selon l'une des revendications 1 à 6, **caractérisée en ce que** les teneurs en $SnO_2$, $V_2O_5$ et $Fe_2O_3$ satisfont :
   $7,0 < Fe_2O_3 / (V_2O_5 \times SnO_2) < 15$, de préférence $8,0 < Fe_2O_3 / (V_2O_5 \times SnO_2) < 15$.

8. Plaque vitrocéramique selon l'une des revendications 1 à 7, **caractérisée en ce que** la composition chimique comprend les constituants suivants dans les limites définies ci-après exprimées en pourcentages pondéraux :

| | | |
|---|---|---|
| $SiO_2$ | 52 à 75%, | de préférence 65,0 à 70% |
| $Al_2O_3$ | 18 à 27%, | de préférence 18 à 21% |
| $Li_2O$ | 2,5 à 5,5%, | de préférence 2,5 à 3,9% |
| $K_2O$ | 0 à 3%, | de préférence 0 à 1,0% |
| $Na_2O$ | 0 à 3%, | de préférence 0 à 1,0% |
| $ZnO$ | 0 à 3,5%, | de préférence 1,2 à 2,8% |
| $MgO$ | 0 à 3%, | de préférence 0,20 à 1,5% |
| $CaO$ | 0 à 2,5%, | de préférence 0 à 1,0% |
| $BaO$ | 0 à 3,5%, | de préférence 0 à 3% |
| $SrO$ | 0 à 2%, | de préférence 0 à 1,4% |
| $TiO_2$ | 1,2 à 5,5%, | de préférence 1,8 à 3,2% |
| $ZrO_2$ | 0 à 3%, | de préférence 1,0 à 2,5% |
| $P_2O_5$ | 0 à 8%, | de préférence 0 à 3%. |

9. Article, notamment dispositif de cuisson, comprenant une plaque de vitrocéramique telle que définie à l'une des revendications 1 à 8.

10. Plaque de verre de type aluminosilicate de lithium, précurseur d'une plaque vitrocéramique telle que définie à l'une des revendications 1 à 8, **caractérisé en ce qu'**elle présente une composition chimique comprenant les constituants suivants dans les limites définies ci-après exprimées en pourcentages pondéraux :

   $SnO_2$ 0,05 à <0,35%
   $V_2O_5$ 0,05 à 0,40%
   $Fe_2O_3$ >0,32 à 0,40%
   $Cr_2O_3$ 0,005 à 0,04%, et
   les teneurs en $SnO_2$, $V_2O_5$ et $Fe_2O_3$ satisfont $14 < 1000 \times (2 Fe_2O_3 - SnO_2) \times V_2O_5 /2 < 40$.

11. Procédé de fabrication d'une plaque de vitrocéramique selon l'une des revendications 1 à 8, comprenant:

   - la fourniture d'une plaque de verre de type aluminosilicate de lithium telle que définie à la revendicaiton 10;
   - la céramisation de la plaque de verre.

**Patentansprüche**

1. Lithium-Aluminosilikat-Glaskeramikplatte,
   **dadurch gekennzeichnet, dass** sie eine chemische Zusammensetzung aufweist, die innerhalb der nachstehend definierten Grenzen die folgenden in Gewichtsprozent ausgedrückten Bestandteile umfasst:

$SnO_2$ 0,05 bis < 0,35 %
$V_2O_5$ 0,05 bis 0,40 %
$Fe_2O_3$ > 0,32 bis 0,40 %
$Cr_2O_3$ 0,005 bis 0,040 % und
der Gehalt an $SnO_2$, $V_2O_5$ und $Fe_2O_3$ Folgendes erfüllt: $14 < 1000 \times (2\, Fe_2O_3 - SnO_2) \times V_2O_5 / 2 < 40$.

2. Glaskeramikplatte nach Anspruch 1, **dadurch gekennzeichnet, dass** der Gehalt an $SnO_2$, $V_2O_5$ und $Fe_2O_3$ Folgendes erfüllt: $20 < 1000 \times (2\, Fe_2O_3 - SnO_2) \times V_2O_5 / 2 < 35$.

3. Glaskeramikplatte nach einem der Ansprüche 1 bis 2,
**dadurch gekennzeichnet, dass** sie einen Gehalt an $V_2O_5$ von 0,07 bis 0,30 %, vorzugsweise von 0,10 bis 0,20 %, aufweist.

4. Glaskeramikplatte nach einem der Ansprüche 1 bis 3,
**dadurch gekennzeichnet, dass** sie einen Gehalt an $Fe_2O_3$ von 0,35 bis 0,40 % aufweist.

5. Glaskeramikplatte nach einem der Ansprüche 1 bis 4,
**dadurch gekennzeichnet, dass** sie einen Gehalt an $SnO_2$ von 0,10 bis 0,32 %, vorzugsweise von 0,15 bis 0,30 %, aufweist.

6. Glaskeramikplatte nach einem der Ansprüche 1 bis 5,
**dadurch gekennzeichnet, dass** sie einen Gehalt an $Cr_2O_3$ von 0,010 bis 0,032 %, vorzugsweise von 0,012 bis 0,030 %, aufweist.

7. Glaskeramikplatte nach einem der Ansprüche 1 bis 6,
**dadurch gekennzeichnet, dass** der Gehalt an $SnO_2$, $V_2O_5$ und $Fe_2O_3$ Folgendes erfüllt:
$7{,}0 < Fe_2O_3 / (V_2O_5 \times SnO_2) < 15$, vorzugsweise $8{,}0 < Fe_2O_3 / (V_2O_5 \times SnO_2) < 15$.

8. Glaskeramikplatte nach einem der Ansprüche 1 bis 7,
**dadurch gekennzeichnet, dass** deren chemische Zusammensetzung die folgenden in Gewichtsprozent ausgedrückten Bestandteile in den nachstehend definierten Grenzen umfasst:

| | | |
|---|---|---|
| $SiO_2$ | 52 bis 75 %, | vorzugsweise 65,0 bis 70 % |
| $Al_2O_3$ | 18 bis 27 %, | vorzugsweise 18 bis 21 % |
| $Li_2O$ | 2,5 bis 5,5 %, | vorzugsweise 2,5 bis 3,9 % |
| $K_2O$ | 0 bis 3 %, | vorzugsweise 0 bis 1,0 % |
| $Na_2O$ | 0 bis 3 %, | vorzugsweise 0 bis 1,0 % |
| ZnO | 0 bis 3,5 %, | vorzugsweise 1,2 bis 2,8 % |
| MgO | 0 bis 3 %, | vorzugsweise 0,20 bis 1,5 % |
| CaO | 0 bis 2,5 %, | vorzugsweise 0 bis 1,0 % |
| BaO | 0 bis 3,5 %, | vorzugsweise 0 bis 3 % |
| SrO | 0 bis 2 %, | vorzugsweise 0 bis 1,4 % |
| $TiO_2$ | 1,2 bis 5,5 %, | vorzugsweise 1,8 bis 3,2 % |
| $ZrO_2$ | 0 bis 3 %, | vorzugsweise 1,0 bis 2,5 % |
| $P_2O_5$ | 0 bis 8 %, | vorzugsweise 0 bis 3 %. |

9. Gegenstand, insbesondere Kochgerät, umfassend eine Glaskeramikplatte wie in einem der Ansprüche 1 bis 8 definiert.

10. Lithium-Aluminosilikat-Glasplatte, Vorläufer einer Glaskeramikplatte wie in einem der Ansprüche 1 bis 8 definiert, **dadurch gekennzeichnet, dass** sie eine chemische Zusammensetzung aufweist, die innerhalb der nachstehend definierten Grenzen die folgenden in Gewichtsprozent ausgedrückten Bestandteile umfasst:

$SnO_2$ 0,05 bis < 0,35 %

$V_2O_5$ 0,05 bis 0,40 %
$Fe_2O_3$ > 0,32 bis 0,40 %
$Cr_2O_3$ 0,005 bis 0,04 % und
der Gehalt an $SnO_2$, $V_2O_5$ und $Fe_2O_3$ Folgendes erfüllt: 14 < 1000 x (2 $Fe_2O_3$ - $SnO_2$) x $V_2O_5$ /2 < 40.

11. Verfahren zum Herstellen einer Glaskeramikplatte nach einem der Ansprüche 1 bis 8, umfassend:

  - Bereitstellen einer Lithium-Aluminosilikat-Glasplatte wie in Anspruch 10 definiert;
  - Keramisierung der Glasplatte.

## Claims

1. A lithium aluminosilicate-type glass-ceramic plate, **characterized in that** it has a chemical composition comprising the following constituents within the limits defined below expressed in weight percent:

  $SnO_2$ 0.05 to < 0.35%
  $V_2O_5$ 0.05 to 0.40%
  $Fe_2O_3$ > 0.32 to 0.40%
  $Cr_2O_3$ 0.005 to 0.040%, and
  the $SnO_2$, $V_2O_5$ and $Fe_2O_3$ contents satisfy 14 < 1000 x (2 $Fe_2O_3$ - $SnO_2$) x $V_2O_5$ /2 < 40.

2. The glass-ceramic plate according to claim 1, **characterized in that** the $SnO_2$, $V_2O_5$ and $Fe_2O_3$ contents satisfy 20 < 1000 x (2 $Fe_2O_3$ - $SnO_2$) x $V_2O_5$ /2 < 35.

3. The glass-ceramic plate according to one of claims 1 or 2, **characterized in that** it comprises a $V_2O_5$ content of 0.07 to 0.30%, more preferably from 0.10 to 0.20%.

4. The glass-ceramic plate according to one of claims 1 to 3, **characterized in that** it comprises an $Fe_2O_3$ content of 0.35 to 0.40%.

5. The glass-ceramic plate according to one of claims 1 to 4, **characterized in that** it comprises an $SnO_2$ content of 0.10 to 0.32%, more preferably from 0.15 to 0.30%.

6. The glass-ceramic plate according to one of claims 1 to 5, **characterized in that** it comprises a $Cr_2O_3$ content of 0.010 to 0.032%, more preferably from 0.012 to 0.030%.

7. The glass-ceramic plate according to one of claims 1 to 6, **characterized in that** the contents of $SnO_2$, $V_2O_5$ et $Fe_2O_3$ satisfy:
7.0 < $Fe_2O_3$ / ($V_2O_5$ x $SnO_2$) < 15, preferably 8.0 < $Fe_2O_3$ / ($V_2O_5$ x $SnO_2$) < 15.

8. The glass-ceramic plate according to any one of claims 1 to 7, **characterized in that** the chemical composition comprises the following constituents within the limits defined below, expressed as weight percent:

| | | | |
|---|---|---|---|
| $SiO_2$ | 52 to 75%, | preferably | 65.0 to 70% |
| $Al_2O_3$ | 18 to 27%, | preferably | 18 to 21% |
| $Li_2O$ | 2.5 to 5.5%, | preferably | 2.5 to 3.9% |
| $K_2O$ | 0 to 3%, | preferably | 0 to 1.0% |
| $Na_2O$ | 0 to 3%, | preferably | 0 to 1.0% |
| ZnO | 0 to 3.5%, | preferably | 1.2 to 2.8% |
| MgO | 0 to 3%, | preferably | 0.20 to 1.5% |
| CaO | 0 to 2.5%, | preferably | 0 to 1.0% |
| BaO | 0 to 3.5%, | preferably | 0 to 3% |
| SrO | 0 to 2%, | preferably | 0 to 1.4% |
| $TiO_2$ | 1.2 to 5.5%, | preferably | 1.8 to 3.2% |
| $ZrO_2$ | 0 to 3%, | preferably | 1.0 to 2.5% |

(suite)

| | | | |
|---|---|---|---|
| $P_2O_5$ | 0 to 8%, | preferably | 0 to 3%. |

9. An article, in particular a cooking device, comprising a glass-ceramic plate as defined in one of claims 1 to 8.

10. A glass plate of the lithium aluminosilicate type, precursor of a glass-ceramic plate as defined in one of claims 1 to 8, **characterized in that** it has a chemical composition comprising the following constituents within the limits defined below expressed in weight percent:

$SnO_2$ 0.05 to < 0.35%
$V_2O_5$ 0.05 to 0.40%
$Fe_2O_3$ > 0.32 to 0.40%
$Cr_2O_3$ 0.005 to 0.04%, and
the $SnO_2$, $V_2O_5$ and $Fe_2O_3$ contents satisfy $14 < 1000 \times (2\ Fe_2O_3 - SnO_2) \times V_2O_5 /2 < 40$.

11. A method for manufacturing a glass-ceramic plate according to one of claims 1 to 8 comprising:

- providing a lithium aluminosilicate-type glass plate according to claim 10;
- the ceramization of the glass plate.

**EP 4 448 461 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014079929 A1
- US 2019077694 A1